# EUROPEAN PATENT APPLICATION

(11) **EP 3 959 997 A1**
(43) Date of publication of application: **02.03.2022**
(21) Application number: 20193051.8
(22) Date of filing: 27.08.2020
(51) Int. Cl.: A23N 12/08, A23N 12/12, A23F 5/04

(54) **APPARATUS FOR DRYING, ROASTING AND COOLING LOOSE PRODUCTS**

(71) Applicant: Krutin, Aleksandr Nikolaevich, Stavropol 355031 (RU); Krutin, Nikolay Aleksandrovich, Stavropol 355004 (RU)
(72) Inventor: Krutin, Aleksandr Nikolaevich, Stavropol 355031 (RU); Krutin, Nikolay Aleksandrovich, Stavropol 355004 (RU)
(74) Representative: Benatov, Samuil Gabriel

(57) **Abstract**

An apparatus for drying, roasting, and cooling loose products comprising a housing; a roasting drum (105) configured to receive loose products (116); a heat source (137), arranged in an interior of a heat exchange chamber (136) and configured to heat a gas, circulated through the housing; a gas distribution grid (128), reversibly coupled to a bottom of the roasting drum (105); a tilting hatch (111), arranged below the gas distribution grid (128) and configured to rotate between a raised position, when the gas distribution grid (128) is coupled to the bottom of the roasting drum (105) and a lowered position, when the gas distribution grid (128) is uncoupled from the bottom of the roasting drum (105) and the lowered position when the gas distribution grid (128) is disconnected from the bottom of the roasting drum; an insulated channel (139), is configured to allow air to circulate from the heat exchange chamber (136) to the gas distribution grid (128); and a cooling table (103), configured to receive and cool the loose products (116), wherein the tilting hatch (111) in the lowered position allows the loose products (116) to slide down the gas distribution grid (128).

## Description

The invention relates to food industry equipment for drying and roasting loose products, such as coffee beans, sunflower seeds, nuts, etc. in a heat carrier stream in the form of hot air.

Roasting and drying of loose products, such as coffee beans, is largely accomplished through two methods: drum roasting, and the Sivetz roasting process, generally also known as fluidized bed roasting.

Drum roasting has been and remains an inefficient method of roasting coffee beans due to the poor heat transfer from drum to bean. This leads to not only uneven roasting of individual coffee beans, but longer overall roast times as well. The roasting drum itself may be heated above the ideal roasting temperature in order to adequately transfer heat to the coffee beans via conduction in addition to generating sufficient convention in the drum to prevent the coffee beans not in contact with the drum walls from cooling down. This may lead to coffee beans being overheated (and subsequently producing an inferior brewed coffee product) when they are inadvertently not mixed and remain in contact with the drum walls for an extended period of time. Moreover, most of the husks removed from the coffee beans during roasting will remain in the drum of a drum roaster, resulting in burned husks and adulterating smoke that may fumigate through and deposit on the coffee beans during the roasting cycle. Again, this may yield a darker bean in appearance and produce an inferior brewed coffee product (e.g. bitter or harsh taste). The burned husk and smoke may also deposit on the surface of the drum, resulting in layers of carbonized, oily lacquers that hinder heat transfer from the drum to the coffee beans.

On the other hand, the fluidized bed roasting process presents a method of evenly roasting each individual coffee bean while constantly mixing all the coffee beans to prevent generating hot spots on each coffee bean.

Early roasters utilizing the Sivetz roasting process represent a simple design including a burner or electric heater, a blower, and a vertical roasting chamber (further roasting chamber), that is tapered towards the ground, wherein heated air may be pumped in from the bottom of the roasting chamber (i.e. the tapered end). The heated air may blow through the middle of the bulk of the coffee beans and transfer heat to the coffee beans while simultaneously mixing the bulk. That is, coffee beans at the bottom of the roasting chamber taper will be transported through the middle of the bulk and to the top of the bulk, wherein the coffee beans fall and deposit towards the outer circumference of the bulk. The mixing continues and forms a "current" such that the coffee beans resemble a fluid.

For heavier batches of loose products, a substantially horizontal fluidized bed may be utilized having many smaller currents induced in the thinner bulk of coffee beans spread over a larger area. Moreover, in commercial batch coffee bean roasters, the coffee beans may continue to roast after the cycle has completed as the roaster attempts to release the roasted coffee beans to a cooling stage, leading to overcooked coffee beans.

Thus, an apparatus for roasting, drying, and cooling loose products utilizing a substantially horizontal fluidized bed roaster and a means of mixing loose products with mixing blades for efficient roasting of loose products in different layers of the bed (especially with heavier weights of product) with a method of rapidly releasing the loose products to a cooling stage is desired.

Accordingly, one object of the present invention is to provide an apparatus for drying, roasting, and cooling loose products which overcomes the above-mentioned limitations of drum roasters and slim spouting-fluid bed roasters. The apparatus ensures good mixing of loose products by air due to fluid beds that are evenly spread over the entire grid area under a rotor drum, where the roasting process occurs. Furthermore, a tilting hatch provides for rapid release of the roasted loose products from the roasting drum to the cooling table, preventing over roasting of the loose products.

The present invention relates to an apparatus for drying, roasting, and cooling loose product, including a housing; a roasting drum configured to receive the loose products; a heat source arranged in the interior of a heat exchange chamber and configured to heat a gas circulated through the housing; a gas distribution grid reversibly coupled to a bottom of the roasting drum, the gas distribution grid configured to receive the loose products on its surface; a tilting hatch arranged below the gas distribution grid and configured to rotate between a raised position when the gas distribution grid is coupled to the bottom of the roasting drum and a lowered position when the gas distribution grid is uncoupled from the bottom of the roasting drum, wherein the tilting hatch in the lowered position allows the loose products to slide down the gas distribution grid; an insulated channel configured to allow air to circulate from the heat exchange chamber to the gas distribution grid; and a cooling table configured to receive and cool the loose products, wherein when the tilting hatch is rotated to the lowered position, the loose products slide down the gas distribution grid into the cooling table.

The present disclosure additionally relates to an apparatus for drying, roasting, and cooling loose products including a housing; a slide rail extending in a lateral direction towards an exterior of the housing; a roasting drum coupled to the slide rail and configured to receive the loose products; a heat source arranged in the interior of a heat exchange chamber and configured to heat a gas circulated through the housing; a gas distribution grid reversibly coupled to a bottom of the roasting drum, the gas distribution grid configured to receive the loose products on its surface; a hatch arranged below the gas distribution grid; an insulated channel configured to allow air to circulate from the heat exchange chamber to the gas distribution grid; and a cooling table configured to receive and cool the loose products, wherein the roasting drum is configured to slide between a closed and an open configuration; and when the roasting drum is slid to the open configuration, the loose products slide through an opening in the bottom of the roasting drum and into the cooling table.

A more complete understanding of the object of the present disclosure and many of the attendant advantages thereof will be readily obtained by reference to the following detailed description when considered in connection with the accompanying drawings wherein:
FIG. 1 is a cross-sectional view schematic of a drying, roasting, and cooling apparatus for loose products including a tilting hatch in a closed configuration, according to an exemplary aspect of the present disclosure;
FIG. 2 is a cross-sectional view schematic of a drying, roasting, and cooling apparatus for loose products including a tilting hatch in an opened configuration, according to an exemplary aspect of the present disclosure;
FIG. 3A is a perspective view schematic of a roasting drum, according to an exemplary aspect of the present disclosure;
FIG. 3B is a diagram of the drying and roasting process of loose products in a fluidized bed including mixing blades configured to mix loose products during roasting, according to an aspect of the present disclosure;
Fig. 4 illustrates a cross sectional schematic of a drying, roasting, and cooling apparatus for loose products including hydraulics, pneumatics, or servomechanisms with a tilting hatch raised, according to an aspect of the present disclosure;
Fig. 5 illustrates a cross sectional schematic of a drying, roasting, and cooling apparatus for loose products including hydraulics with a tilting hatch lowered, according to an aspect of the present disclosure;
Fig. 6A illustrates a cross sectional schematic of a roasting apparatus with a roasting drum in a closed configuration, according to an aspect of the present disclosure;
Fig. 6B illustrates a cross sectional schematic of a roasting apparatus with a roasting drum in an open configuration, according to an aspect of the present disclosure; and
FIG. 7 is a schematic view of a hardware diagram for an illustrative computer for performing control operations of a drying, roasting, and cooling apparatus for loose products.

### DETAILED DESCRIPTION

The description set forth below in connection with the appended drawings is intended as a description of various aspects of the disclosed subject matter and is not necessarily intended to represent the only aspect(s). In certain instances, the description includes specific details for the purpose of providing an understanding of the disclosed subject matter. However, it will be apparent to those skilled in the art that aspects may be practiced without these specific details. In some instances, well-known structures and components may be shown in block diagram form in order to avoid obscuring the concepts of the disclosed subject matter.

Reference throughout the specification to "one aspect" or "an aspect" means that a particular feature, structure, characteristic, operation, or function described in connection with an aspect is included in at least one aspect of the disclosed subject matter. Thus, any appearance of the phrases "in one aspect" or "in an aspect" in the specification is not necessarily referring to the same aspect. Further, the particular features, structures, characteristics, operations, or functions may be combined in any suitable manner in one or more aspects. Further, it is intended that aspects of the disclosed subject matter can and do cover modifications and variations of the described aspects. It must be noted that, as used in the specification and the appended claims, the singular forms "a," "an," and "the" include plural referents unless the context clearly dictates otherwise.

That is, unless clearly specified otherwise, as used herein the words "a" and "an" and the like carry the meaning of "one or more." Additionally, it is to be understood that terms such as "upper," "lower," "front," "rear," "side," "interior," "exterior," "top," "bottom," and the like that may be used herein, merely describe points of reference and do not necessarily limit aspects of the disclosed subject matter to any particular orientation or configuration. Furthermore, terms such as "first," "second," "third," etc., merely identify one of a number of portions, components, points of reference, operations and/or functions as described herein, and likewise do not necessarily limit aspects of the disclosed subject matter to any particular configuration or orientation.

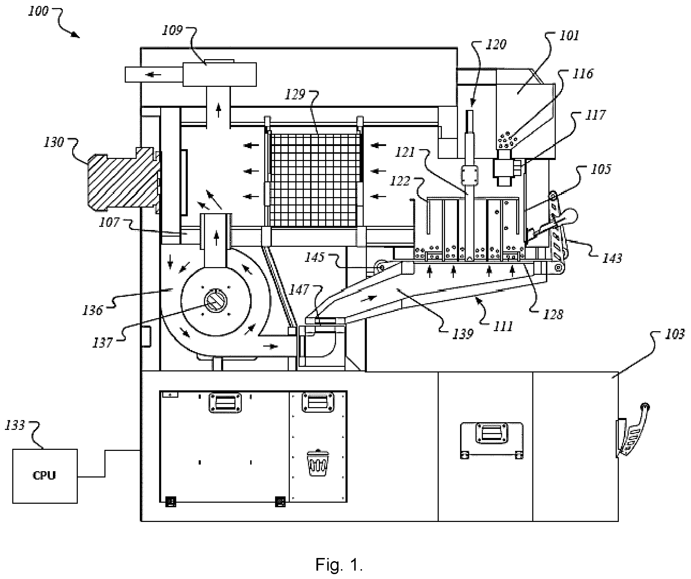

Fig. 1 illustrates a perspective view schematic of a drying, roasting, and cooling apparatus 100 (herein referred to as roasting apparatus 100), according to an exemplary aspect of the present disclosure. The main features of the roasting apparatus 100 may include a roasting drum 105, a tilting hatch 111, a screen 129, a ventilator 130, a burner 137 surrounded by a heat exchange chamber 136, and a cooling table 103.

In an exemplary aspect, the roasting apparatus 100 may include a housing divided into multiple compartments in an interior of the housing, with each compartment being flexibly coupled such that a gas may travel between compartments. For example, the housing may be substantially rectangular. It should be noted again that the following descriptions of "top," "bottom," "left," "right," "clockwise," "counter-clockwise," and the like to describe the positioning of the components of the roasting apparatus 100 as illustrated in the figures are exemplary and other configurations that accommodate the described airflow and locations and movement of components are possible.

Gas circulation between the different compartments may be enabled and protected through different connecting devices such as ducts. The housing may be substantially divided horizontally via a divider 107, wherein the divider 107 may span the horizontal plane of the roasting apparatus 100 to form a top portion and a bottom portion of the housing. The top portion and bottom portion may each include a first door and a second door, respectively, allowing access to components in the interior of the housing. The first door and second door may each include at least one window for inspecting the components during use of the roasting apparatus 100. In one aspect, the first door and the second door may be fabricated almost entirely from a transparent material, for example glass. As shown in Fig. 1, the roasting drum 105 may be arranged on the right side of the housing in the top portion.

The roasting drum 105 may be formed as part of the divider 107 such that a fluid seal is maintained between the top and bottom portions of the housing, wherein a gas traveling from the burner 137 to the top-right portion of the housing may only pass through the roasting drum 105. The roasting drum 105 may be substantially cylindrical and configured to, for example, dry, roast, steam or cool a bulk of loose products 116.

In an interior of the roasting drum 105 may be arranged a mixer 120. The mixer 120 may include a mixer rotor 121, to which a plurality of mixer blades 122 may be attached. The mixer 120 may be configured to mix the loose products 116 by rotating the mixer rotor 121 in a predetermined direction such that the plurality of mixer blades 122 is rotated through the loose products 116. The mixer rotor 121 may be attached to a motor (not shown) arranged above the roasting drum 105.

The screen (filter) 129 may be arranged in the top portion of the housing between the right side and the left side of the housing. In one aspect, the screen 129 may be arranged in the middle of the top portion and be permeable to fluid, for example heated gas, passing from the top-right to the top-left portions of the housing. The screen 129 may be configured to filter particulates released from the loose products 116 during processing. For example, the loose products 116 may be coffee beans including an outer husk, that may release from the coffee beans when roasted. The husks may be carried by the hot gas from the roasting drum 105 to the screen 129, where the screen 129 filters the chaff and prevents it from being circulated further through the roasting apparatus 100.

The ventilator 130 may be arranged on the left side in the top portion of the housing and configured to combine fresh air from the top portion, circulated heated air from the roasting drum 105, and new heated air from the burner 137. The combined heated air may be directed, via a first duct connecting to top-left and bottom-left portions, to the heat exchange chamber 136 arranged on the left side in the bottom portion of the housing. The burner 137 may be arranged substantially in the interior of the heat exchange chamber 136 and may be configured to produce heated gas for drying or roasting the loose products 116.

For example, the burner 137 may be a gas furnace, an oil furnace, an electric heater, a tubular heating element, or any type of heat source configured to heat a gas that is known in the art. In one aspect, the burner 137 arranged inside the interior of the heat exchange chamber 136 allows the air circulated through the heat exchange chamber 136 to remain heated as it passes towards the roasting drum 105. In another aspect, the burner 137 may be heated to a predetermined temperature and the ventilator 130 may direct air to the heat exchange chamber 136 where the air increases in temperature via convection to a predetermined temperature as it passes towards the roasting drum 105. Notably, the air inside the heat exchange chamber 136 may be optionally circulated within the heat exchange chamber 136 around the burner 137 to increase the efficiency of heating of the overall roasting apparatus 100.

In the exemplary embodiment of the device, the tilting hatch 111 may be arranged below the roasting drum 105 with a gas distribution grid 128 at the bottom of the roasting drum 105 above the tilting hatch 111; an insulated channel 139 in the interior of the tilting hatch 111, a hatch lever 143 attached to a first end of the tilting hatch 111 and the housing, and a hatch hinge 145 arranged along a top of the tilting hatch 111. A second end of the tilting hatch 111 may be reversibly coupled to the compartment with the heat exchange chamber 136 and burner 137 via a hatch seal 147. That is, a fluid seal is formed between the insulated channel 139 and the hatch seal 147 such that gas is prevented from escaping when traveling between the heat exchange chamber 136 and the insulated channel 139. The hatch seal 147 may be arranged adjacent to the heat exchange chamber 136 and configured to allow circulation of the heated gas from the heat exchange chamber 136 to the roasting drum 105 via the insulated channel 139. The heated gas may travel through the insulated channel 139 and a plurality of holes in the gas distribution grid 128. The roasting drum 105 may include sidewalls, the bottoms of which may form a reversible fluid seal with the gas distribution grid 128. The gas distribution grid 128 may generate a fluid bed of heated gas configured to mix and process the loose products 116. The fluid bed is generated by the air pressure from the flow of heated gas passing through the predetermined pattern formed via the plurality of holes in the gas distribution grid 128. The flow of heated gas being blown from the heat exchange chamber 136 through the insulated channel 139 is divided into numerous individual flows at the gas distribution grid 128 that are evenly distributed over the entire area under the roasting drum 105.

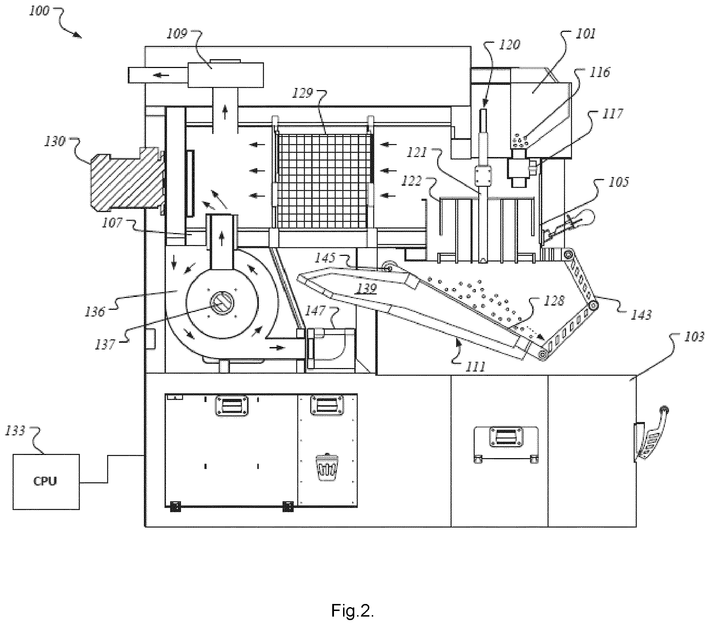

Fig. 2 illustrates a perspective view schematic of the roasting apparatus 100 with the tilting hatch 111 lowered, according to the embodiment of the present disclosure. The tilting hatch 111 may be attached to the roasting apparatus 100 by the hatch hinge 145. The hatch hinge 145 attachment location may induce rotation of the tilting hatch 111 around said attachment location in the absence of the tilting hatch 111 being locked in a raised position. For example, as shown in Fig. 2, this would result in a clockwise rotation of the tilting hatch 111 about the hatch hinge 145. Thus, the tilting hatch 111 may be configured to reversibly rotate, or "tilt", about the hatch hinge 145 into two main configurations: a closed configuration as shown in Fig. 1, and an open configuration as shown in Fig. 2. Notably, the location of the hatch hinge 145 may be arranged outside an area of the gas distribution grid 128. Thus, a rotation axis of the gas distribution grid may be arranged outside the area of the gas distribution grid when rotating the tilting hatch. In the exemplary aspect, the configuration of the tilting hatch 111 is controlled via the hatch lever 143 attached to an exterior of the housing.

The hatch lever 143 may include a handle with two arms, wherein a first arm is attached an attachment point on the exterior of the housing and the second arm is attached to the first end of the tilting hatch 111. The handle may be moved, for example by a human operator or a robot, from an up position to a down position in order to raise and lower, respectively, the first end of the tilting hatch 111. That is, moving the handle from the up position to the down position allows the tilting hatch 111 to rotate about the hatch hinge 145 and go from the closed to open configuration.

The raising and lowering of the first end of the tilting hatch 111 may allow for the loose products 116 to quickly exit the roasting drum 105 and relocate to the cooling table 103 arranged below the roasting drum 105 and tilting hatch 111. The first end of the tilting hatch 111 may be lowered such that the seal between the roasting drum 105 and the gas distribution grid 128 is broken and the gas distribution grid 128 adopts a downward sloped orientation.

For example, the downward sloped orientation may be sloped below horizontal compared to the plane of the gas distribution grid 128 when the tilting hatch is in the closed orientation. The downward sloped orientation allows the loose products arranged in the interior of the roasting drum 105 to slide down the gas distribution grid 128 into the cooling table 103. The cooling table 103 may include fans and a perforated bed to facilitate blowing air through the loose products 116 to rapidly cool the loose products 116 and prevent over-roasting of the roasted loose products 116 in a controllable method.

Advantageously, the tilting hatch 111 may allow for all of the loose products 116 to stop roasting inside the roasting drum 105 and move to the cooling table 103 rapidly, especially compared to a design where a chute is utilized and only a fraction of the loose products 116 may exit the roasting drum 105 at a time. Here, the entirety of the roasted batch is dumped at once and rapidly. Thus, the temperature of all the loose products 116 begins lowering faster. In another advantage, the location of the hatch hinge 145 allows for the entire weight of the loose products 116 to apply downward force on the gas distribution grid 128 and aid in lowering the first end of the tilting hatch 111. This may present an advantage in reducing the energy needed to lower the tilting hatch 111 or eliminating the need for energy input as compared to if the hatch hinge 145 were located in the middle of (or at a location between edges of) the gas distribution grid 128 where energy may be utilized to rotate one side of the gas distribution grid above horizontal.

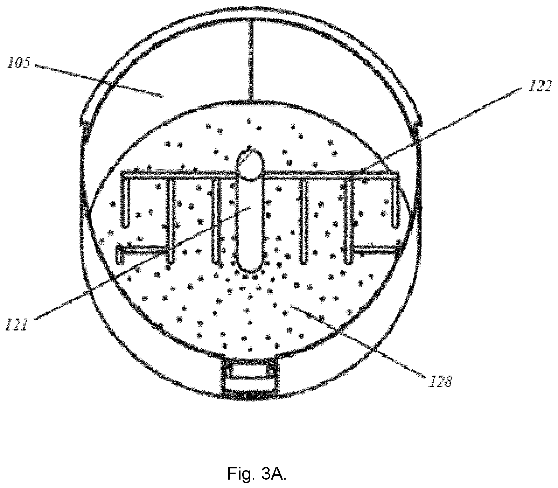

Fig. 3A illustrates a perspective view schematic of the gas distribution grid 128 and roasting drum 105, according to an embodiment of the present disclosure. The gas distribution grid 128 may be substantially round, rectangular, or any other shape, including figure-8 wherein two circular distribution grids 128 may be attached.

The gas distribution grid (grate)128 may be patterned with a predetermined pattern for the plurality of holes. The gas distribution grid 128 may be removed and replaced with a different grid including a different predetermined pattern, wherein the predetermined pattern may be determined based on the desired mode (e.g. roasting, drying, steaming) or based on the type of loose product 116 to be processed (e.g. coffee beans, nuts). Moreover, the diameter of the plurality of holes, their quantity, and location, as well as width and thickness of the gas distribution grid 128 may be fabricated according to the aforementioned factors. For example, a thicker gas distribution grid 128 may enhance heat conduction due to its ability to absorb and retain heat longer and at a higher temperature as compared to a thinner gas distribution grid 128. Additionally, the configuration of the mixer blades 122 may be adjusted according to the aforementioned factors. To fix the grid, the device has quick-release clamping mounts with horizontal positioning for grids of different thickness.

As previously mentioned, fluid bed roasters may provide a majority of the heating capacity via convection, and a remaining minority of the heating capacity via conduction. Thus, the heated gas distribution grid 128 may have a lower heating capacity due to its material properties and lower bulk volume as compared to a roasting drum used in drum roasting. In general, roasting drums used in drum roasting may hold reserve heat in the material of the roasting drum (higher heat capacity) as compared to the gas distribution grid 128, thus leading to a majority of the heating capacity being via conduction and a minority via convection.

Advantageously, by adjusting the dimensions of the gas distribution grid 128, such as its width and thickness, the conductive heating capacity of the gas distribution grid 128 may be adjusted. For example, by increasing the thickness of the gas distribution grid 128, the roasting via conduction and convection may be adjusted to a ratio of 50% conduction and 50% convection. The airflow may also be reduced to reach said ratio, thereby reducing the load on the ventilator 130. Any decrease in mixing of the loose products 116 may be accommodated for via the mixer 120 by adjusting a rotation speed of the mixer 120.

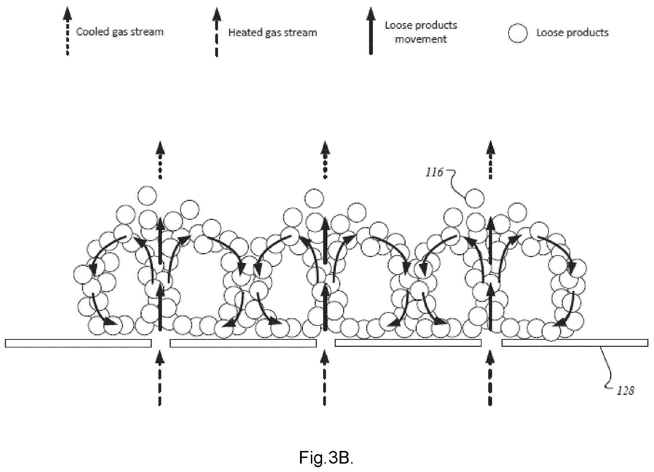

Fig. 3B illustrates a cross-sectional diagram of the roasting process of the loose products 116 in a fluidized bed while on the gas distribution grid 128, according to an aspect of the present disclosure. As previously described, the flow of heated gas may travel through the insulated channel 139 into numerous individual flows at the gas distribution grid 128 that are evenly distributed over the entire area under the roasting drum 105. This may result in heating the loose products 116 and simultaneously actively mixing the loose products 116, thereby simultaneously mixing the loose products in substantially circular directions and evenly heating and roasting the loose products 116. Afterward, the gas may exit out of the top of the fluidized bed as a cooled gas after having transferred its heat to the loose products 116 and the gas distribution grid 128. These multiple flows and circularized currents of hot gas in the fluidized bed cause the roasting process to be faster and more efficient, notably compared to conventional drum roasters for which the drum needs to be pre-heated before starting the roasting process as well as over-heated in order to provide sufficient heating to loose products 116 not in contact with the drum. In another aspect, embodiments of the roasting apparatus 100 may be configured to process different batch sizes of loose products 116 weighing between 100 g to 500 kg and any practical range within. For example, the different batch sizes may include at least one of 100 g, 500 g, 1 kg, 2 kg, 5 kg, 7 kg, 12 kg, 15 kg, 30 kg, 60 kg, 120 kg, 240 kg and 500 kg. As another example, the different batch sizes may have any range within the range of 100 g to 500 kg, such as 100 g to 500 g, 100 g to 1kg, or 100 g to 2 kg, or 100 g to 5 kg, or 100 g to 7 kg, or 100 g to 12 kg, or 100 g to 30 kg, or 100 g to 60 kg, or 100 g to 120 kg, or 100 g to 240 kg, or 100 g to 500 kg.

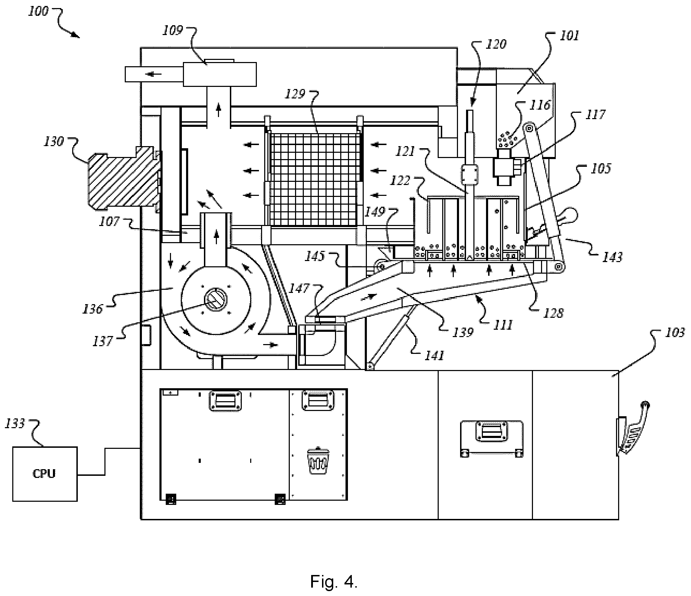

Fig. 4 illustrates a cross sectional schematic of the roasting apparatus 100 including hydraulics with the tilting hatch 111 raised,

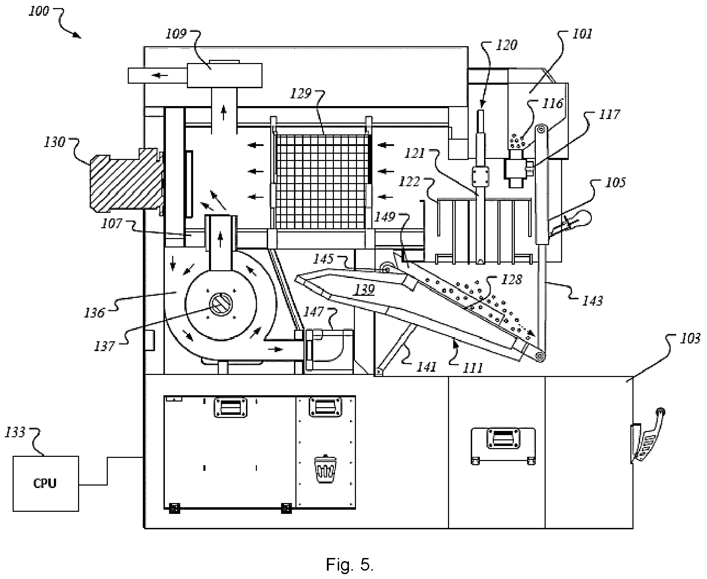

and Fig. 5 illustrates a cross sectional schematic of the roasting apparatus 100 including hydraulics with the tilting hatch 111 lowered, according to an aspect of the present disclosure. The heavier weights of loose products 116 may be a dangerous or difficult weight for a human operator to attempt to lower or raise the tilting hatch 111 using the handle of the hatch lever 143. Therefore, a hydraulic arm may be used for the hatch lever 143 instead of a mechanical lever, wherein the hydraulic device is configured to fill and an arm extends to lower the tilting hatch 111, and the hydraulic device is configured to empty and the arm contracts to raise the tilting hatch 111. Other non-limiting examples of raising and lowering mechanisms known by those in the art may include at least one of a pneumatic, servomechanisms, a chain coupled with gears powered by an external power source, a belt coupled with gears powered by an external power source, and other assistive mechanisms, or any combination thereof.

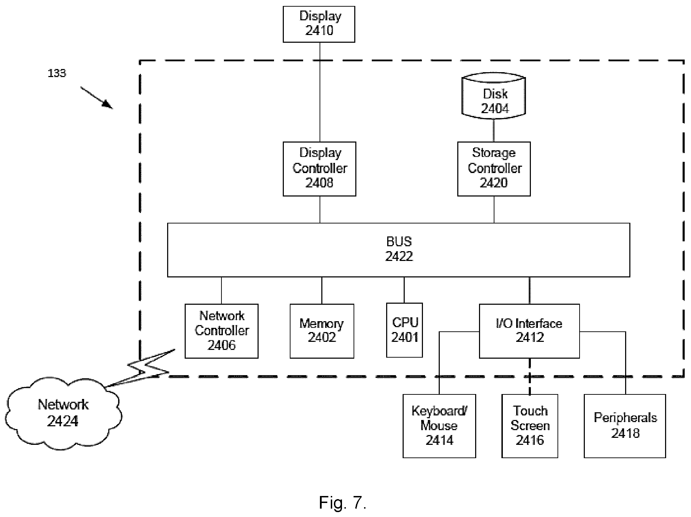

In another aspect, a hatch hydraulic 141 may be arranged below the tilting hatch 111 and utilized to control the rate of raising or lowering of the tilting hatch 111. As previously mentioned, the weight of the tilting hatch 111 may be too heavy for a human operator to raise or lower the tilting hatch 111 without assistance, and the hatch hydraulic 141 may be utilized to aid in raising or lowering the tilting hatch 111 at a controlled rate. In another aspect, the hatch hydraulic 141 may be used to raise or lower the tilting hatch 111 entirely by itself. The roasting apparatus 100 may additionally include a hatch guide wall 149 forming an upright guiding structure adjacent to the gas distribution grid 128. The hatch guide wall 149 may extend in the direction of sliding of the loose products 116. The hatch guide wall 149 may be configured to prevent loose products 116 from spilling over in a direction substantially perpendicular to the slide direction of the loose products 116 when the tilting hatch 111 is lowered. One or more hatch guide walls 149 may be installed on one or both sides of the gas distribution grid 128 to facilitate the sliding of the loose products 116. The roasting apparatus 100 may include a hopper 101 to facilitate loading of loose products 116 into the roasting drum 105. The hopper 101 may include one or more inspection windows 117 providing a view to the interior of the hopper and the roasting drum 105 to monitor the loose products 116 stored and dropped from the hopper 101 as well as in the roasting drum 105 during processing. An exhaust blower 109 may be included to remove excess gas and humidified gas to eliminate any excess pressure inside the roasting apparatus 100 as well as remove smoke generated via the roasting process in order to provide a cleaner roasting process. This roasting process occurring in the roasting drum 105 is controlled manually or by a computer 133 including a microprocessor and following a pre-set program, see Fig. 7 and following paragraphs for a more detailed description of the computer 133.

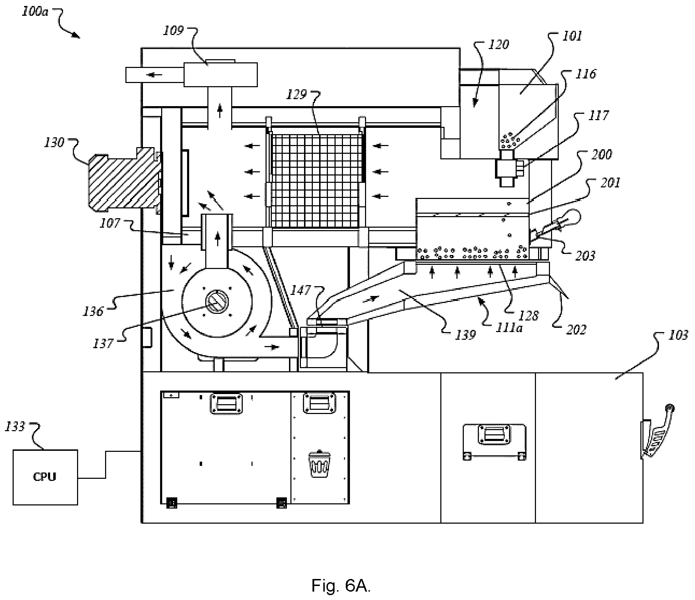

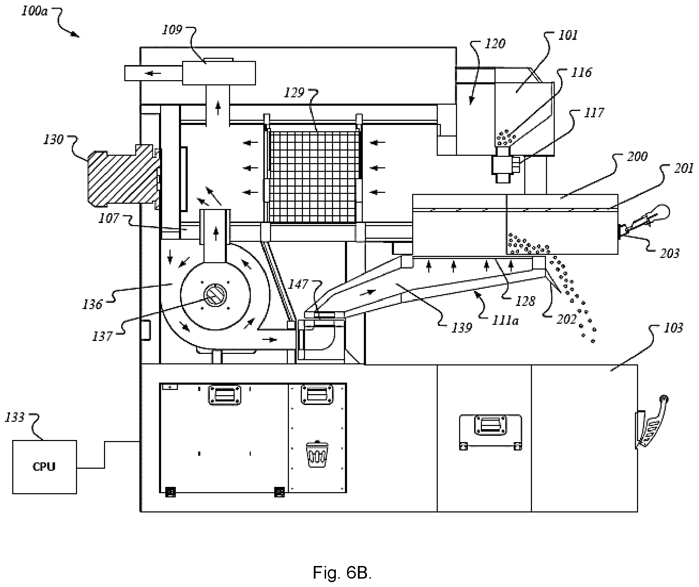

**Fig. 6A** illustrates a cross sectional schematic of a roasting apparatus 100a with the roasting drum 105 in a closed configuration, and Fig. 6B illustrates a cross sectional schematic of the roasting apparatus 100a with the roasting drum 105 in an open configuration, according to an aspect of the present disclosure. In one aspect, the roasting apparatus 100a includes a sliding roasting drum 200, a fixed hatch 111a, a slide rail 201, a drop guide 202, and a survey handle 203. The roasting apparatus 100a may be configured to allow rapid release of the loose products 116 after processing has completed, for example after roasting, in order to maintain product quality and integrity (e.g. prevent over roasting). The fixed hatch 111a may be attached to the roasting apparatus 100a in a manner such that the fixed hatch 111a remains stationary. Similar to the roasting apparatus 100, the fixed hatch 111a may be arranged below the sliding roasting drum 200 with the gas distribution grid 128 at a bottom of the sliding roasting drum 200 above the fixed hatch 111a, the insulated channel 139 in an interior of the fixed hatch 111a, and a first end of the fixed hatch 111a coupled to the gas distribution grid 128. A second end of the fixed hatch 111a may be coupled to the compartment with the heat exchange chamber 136 and burner 137.

The slide rail 201 in this embodiment is constructed to laterally extend, with an additional rail. With this, due to the moving out of the additional rail, it stays out of the roasting zone (the gas distribution grid).

The roasting drum is designed bottomless, or has an aperture in the lowest part (on the bottom).

The sliding roasting drum 200 may be a construction, configured for extensible joint with the slide rail 201, for example by an additional rail, wherein the sliding roasting drum 200 can move along the rail 201 from a closed configuration to an open configuration and back again. In this case, the additional rail serves to advance the roasting drum together with the product to be roasted from the roasting zone beyond the gas distribution grid to ensure the product is discharged onto the cooling table through the hole in the lower part of the drum, and the drum is completely emptied when it is positioned on the additional rail.

Thus, in an open configuration, the roasting drum is completely outside the roasting area, outside the grate.

The slide rail 201 may be a structure extending in a lateral direction, for example towards the right as shown in **Fig. 6A** **and** **6B****,** and configured to receive the sliding roasting drum 200, for example via the additional rail. The slide rail 201 may be configured to support and guide the sliding roasting drum 200 as it moves between the closed and open configurations. The survey handle 203 may be attached to the exterior of the housing adjacent to the sliding roasting drum 200. The sliding roasting drum 200 may be configured to slide to the open configuration by pulling the survey handle 203. For example, as shown in Fig. 6B, the survey handle 203 may be pulled to the right. This may slide the sliding roasting drum 200 to the right, in addition to any portion of the housing attached to the sliding roasting drum 200. Similar to roasting drum 105, a bottom of the sliding roasting drum 200 may be open. As the sliding roasting drum 200 slides to the open configuration, the loose products 116 are displaced beyond the edge of the area of the gas distribution grid 128 and the first end of the fixed hatch 111a, and the loose products 116 may release from the sliding roasting drum 200 and drop into the cooling table 103.

Furthermore, the loose products 116 built up towards the left side of the sliding roasting drum 200 (as shown in Fig. 6B) may be raked out by the left sidewall of the sliding roasting drum 200 until the left sidewall passes over an edge of the first end of the fixed hatch 111a. The drop guide 202 may be a lip configured to guide the loose products 116 into the cooling table 103.

Thus, the design of the device with a sliding rail and the additional rail extending from it, as well as a frying drum with an opening in its lower part, makes it possible to move the frying drum with the product outside the frying area (while the walls in the drum allow collecting and displacing all the product from the area frying) for automatic unloading of the finished product onto the cooling table. This design of the device eliminates the need for the operator to completely remove the frying drum from the device manually in order to unload the finished product. As a result of such automation of the drum unloading process, a significant acceleration of the finished product unloading and its cooling is achieved, which makes it possible to obtain a product of the required roasting and eliminate overcooking. In addition, the labour intensity when unloading the product is reduced.

The survey handle 203 may additionally include a rod structure with a hollow volume at a tip of the rod configured to be inserted through the housing and into the loose products 116. During roasting, the hollow volume of the rod structure may scoop a sample of the loose products 116 and the rod structure may be extracted from the housing to allow a user to visually inspect the loose products 116, for example to determine if the colour of the loose products 116 has signalled a completion of the roasting process. Thus, the handle provides not only the sliding of the roasting drum, but also performs the function of a sampler, which simplifies the design of the device due to the absence of the need to implement both the handle and the sampler in the device separately.

It should be noted again that the previous descriptions of "top," "bottom," "left," "right," and the like to describe the positioning of the components of the roasting apparatus 100A as illustrated in the figures are exemplary and other configurations that accommodate the described airflow and locations and movement of components are possible.

An implementation of an exemplary embodiment of the apparatus is as follows. First, the loose products 116 may be fed into the hopper 101 by a conveyor belt until the weight of the loose products 116 is equal to a pre-determined value, or a predetermined batch size of the loose products 116 may be fed manually or via a conveyor. The burner 137 may heat a gas until a predetermined roasting temperature is reached. As soon as a temperature sensor inside the roasting drum 105 registers the predetermined temperature, the hopper 101 may release the loose products 116 into to the roasting drum 105 and the ventilator 130 may begin circulating the heated gas and fresh gas from the exterior of the housing through the heat exchange chamber 136, the insulated channel 139, the plurality of holes in the gas distribution grid 128, the loose products 116, the screen 129, and back to the ventilator 130.

The heated gas directed through the gas distribution grid 128 generates a fluid bed on which the loose products 116 sit. The loose products 116 at first are evenly distributed over the gas distribution grid 128 by the gas flow and then are actively mixed in the fluid bed or additionally agitated by the mixer 120 to distribute the loose products 116 more evenly over the gas distribution grid 128.

During the roasting time that is pre-set by an operator, the temperature in the roasting drum 105 is controlled to increase and decrease according to the roasting mode and programmed temperature profile. For example, the computer 133 may be configured to control the temperature and adjust the temperature according to the programmed temperature profile. The computer 133 may be configured to adjust a heat output of the burner 137 and the air flow (e.g. flow rate, etc.) in the roasting apparatus 100 according to said roasting mode.

The loose products 116 may roast and mix in the heated gas layer generated by the fluid bed according to the roasting mode. The excessive air and humidified air may exit via the exhaust blower 109 to prevent or relieve excess pressure or smoke generated inside the roasting apparatus 100. For example, an air pressure sensor may detect a build-up of pressure and the computer 133 may initiate a pressure release method. When the roasting time is completed according to the roasting mode, the ventilator 130 may be shut off, for example via the computer 133, and the tilting hatch 111 may be lowered to the open configuration in order to allow the loose products 116 to slide down the gas distribution grid 128 and into the cooling table 103. For example, the computer 133 may activate the hatch lever 143 to lower the tilting hatch 111. The cooling table 103 may be activated, for example via the computer 133, and begin to cool the loose products 116 to prevent over roasting of the roasted loose products 116 in a more controllable way.

Fig. 7 is a block diagram of a hardware description of the computer 133, according to an exemplary embodiment of the present disclosure. In the embodiments, computer 133 may be a desk top, laptop, server, or pre-installed touch screen device. In Fig. 7, the computer 133 includes a processor (CPU) 2401 which performs the processes described herein. The process data and instructions may be stored in memory 2402. These processes and instructions may also be stored on a storage medium disk 2404 such as a hard drive (HDD) or portable storage medium or may be stored remotely. Further, the claimed advancements are not limited by the form of the computer- readable media on which the instructions of the inventive process are stored. For example, the instructions may be stored on CDs, DVDs, in FLASH memory, RAM, ROM, PROM, EPROM, EEPROM, hard disk or any other information processing device with which the computer 2400 communicates, such as a server or computer.

Further, the claimed advancements may be provided as a utility application, background daemon, or component of an operating system, or combination thereof, executing in conjunction with CPU 2401 and an operating system such as Microsoft^{®} Windows^{®}, UNIX^{®}, Oracle ^{®} Solaris, LINUX^{®}, Apple macOS^{®} and other systems known to those skilled in the art.

In order to achieve the computer 133, the hardware elements may be realized by various circuitry elements, known to those skilled in the art. For example, CPU 2401 may be a Xenon^{®} or Core^{®} processor from Intel Corporation of America or an Opteron^{®} processor from AMD of America, or may be other processor types that would be recognized by one of ordinary skill in the art. Alternatively, the CPU 2401 may be implemented on an FPGA, ASIC, PLD or using discrete logic circuits, as one of ordinary skill in the art would recognize. Further, CPU 2401 may be implemented as multiple processors cooperatively working in parallel to perform the instructions of the inventive processes described above.

The computer 133 in Fig. 7 also includes a network controller 2406, such as an Intel Ethernet PRO network interface card from Intel Corporation of America, for interfacing with network 2424. As can be appreciated, the network 2424 can be a public network, such as the Internet, or a private network such as LAN or WAN network, or any combination thereof and can also include PSTN or ISDN sub-networks. The network 2424 can also be wired, such as an Ethernet network, or can be wireless such as a cellular network including EDGE, 3G and 4G wireless cellular systems. The wireless network can also be WiFi^{®}, Bluetooth^{®}, or any other wireless form of communication that is known.

The computer 133 further includes a display controller 2408, such as a NVIDIA^{®} GeForce^{®} GTX or Quadro^{®} graphics adaptor from NVIDIA Corporation of America for interfacing with display 2410, such as a Hewlett Packard^{®} HPL2445w LCD monitor. A general purpose ON/OFF interface 2412 interfaces with a keyboard and/or mouse 2414 as well as an optional touch screen panel 2416 on or separate from display 2410. General purpose ON/OFF interface 2412 also connects to a variety of peripherals 2418 including printers and scanners, such as an OfficeJet^{®} or DeskJet^{®} from Hewlett Packard.

The general purpose storage controller 2420 connects the storage medium disk 2404 with communication bus 2422, which may be an ISA, EISA, VESA, PCI, or similar, for interconnecting all of the components of the computer 133. A description of the general features and functionality of the display 2410, keyboard and/or mouse 2414, as well as the display controller 2408, storage controller 2420, network controller 2406, and general purpose I/O interface 2412 is omitted herein for brevity as these features are known.

A number of implementations have been described. Nevertheless, it will be understood that various modifications may be made without departing from the spirit and scope of this disclosure. For example, preferable results may be achieved if the steps of the disclosed techniques were performed in a different sequence, if components in the disclosed systems were combined in a different manner, or if the components were replaced or supplemented by other components.

The foregoing discussion describes merely exemplary embodiments of the present disclosure. As will be understood by those skilled in the art, the present disclosure may be embodied in other specific forms without departing from the spirit or essential characteristics thereof. Accordingly, the disclosure is intended to be illustrative, but not limiting of the scope of the disclosure, as well as the claims. The disclosure, including any readily discernible variants of the teachings herein, defines in part, the scope of the foregoing claim terminology such that no subject matter of the invention is dedicated to the public.

The above disclosure also encompasses the embodiments listed below.
(1) An apparatus for drying, roasting, and cooling loose products including a housing; a roasting drum configured to receive the loose products; a burner, arranged in an interior of a heat exchange chamber and configured to heat a gas circulated through the housing; a gas distribution grid reversibly coupled to a bottom of the roasting drum, the gas distribution grid configured to receive the loose products on a face of the gas distribution grid; a tilting hatch arranged below the gas distribution grid and configured to rotate between a raised position when the gas distribution grid is coupled to the bottom of the roasting drum and a lowered position when the gas distribution grid is uncoupled from the bottom of the roasting drum, wherein the tilting hatch in the lowered position allows the loose products to slide down the gas distribution grid; an insulated channel configured to allow air to circulate from the heat exchange chamber to the gas distribution grid; and a cooling table configured to receive and cool the loose products, wherein when the tilting hatch is rotated to the lowered position, the loose products slide down the gas distribution grid into the cooling table.
(2) The apparatus of feature (1), further including a ventilator configured to circulate the gas; and a screen configured to filter particulates released from the loose products circulated from the roasting drum to the ventilator.
(3) The apparatus of features (1) or (2), further including a mixer including a mixer rotor and a plurality of mixing blades attached to the mixer rotor, wherein the mixer is arranged in an interior of the roasting drum and attached to the housing, wherein the mixer is configured to rotate about an axis of the mixer rotor and mix loose products arranged in the roasting drum; and a hatch lever attached to the housing and configured to raise or lower the tilting hatch.
(4) The apparatus of features (1) to (3), wherein the hatch lever is a hydraulic lever.
(5) The apparatus of features (1) to (4), further including a hopper arranged above the roasting drum and configured to feed the loose products into the roasting drum.
(6) The apparatus of features (1) to (5), wherein the hopper includes one or more inspection windows configured to provide a view of the loose products in the hopper and in the roasting drum.
(7) The apparatus of features (1) to (6), wherein the tilting hatch includes at least one hatch guide wall configured to guide the loose products into the cooling table when the tilting hatch is in the lowered position.
(8) The apparatus of features (1) to (7), wherein the tilting hatch is attached to the housing by a hatch hinge and the hatch hinge is arranged outside an area of the gas distribution grid.
(9) The apparatus of features (1) to (8), wherein a rotation axis of the gas distribution grid is arranged outside an area of the gas distribution grid when rotating the tilting hatch.
(10) The apparatus of features (1) to (9), wherein the force to rotate the tilting hatch to the lowered position is based on a weight of the loose products arranged in the roasting drum.
(11) The apparatus of features (1) to (10), wherein the ventilator is configured to combine ambient gas from an exterior of the housing, heated gas from the burner, and heated gas circulated through the roasting drum and direct said combination of gasses to the heat exchange chamber.
(12) The apparatus of features (1) to (11), wherein the insulated channel is configured to direct heated gas from the heat exchange chamber to the roasting drum through the gas 20 distribution grid.
(13) The apparatus of features (1) to (12), wherein the gas distribution grid includes a plurality of holes forming a predetermined pattern configured to mix the loose products; the plurality of holes providing passages for the heated gas; and the plurality of holes generate a fluid bed for substantially simultaneous mixing and roasting the loose products.
(14) The apparatus of features (1) to (13), further comprising a computer including a processor that executes a process of roasting the loose products following a predetermined processing regimen.
(15) The apparatus of features (1) to (14), wherein the weight of the loose products loaded into the roasting drum is greater than 100 g.
(16) The apparatus of features (1) to (15), wherein the housing includes an upper portion, a lower portion, a first side, and a second side; the roasting drum is arranged in the upper portion of the housing on the first side; the ventilator is arranged in the upper portion of the housing on the second side; the screen is arranged in the upper portion of the housing substantially between the roasting drum and the ventilator; the tilting hatch is arranged below the roasting drum in the lower portion of the housing on the first side; the heat exchange chamber arranged in the lower portion of the housing on the second side; and the cooling table is arranged below the tilting hatch.
(17) The apparatus of features (1) to (16), further comprising an air duct configured to connect the upper portion and the lower portion of the housing.
(18) The apparatus of features (1) to (17), wherein the ventilator is configured to circulate the gas from the roasting drum to the screen, to the heat exchange chamber, to the insulated channel, to the gas distribution grid, and back to the roasting drum.
(19) The apparatus of features (1) to (18), wherein the loose products are simultaneously mixed and roasted in substantially circular directions.
(20) An apparatus for drying, roasting, and cooling loose products including a housing; a slide rail extending in a lateral direction towards an exterior of the housing; a roasting drum coupled to the slide rail and configured to receive the loose products; a heat source arranged in an interior of a heat exchange chamber and configured to heat a gas circulated through the housing; a gas distribution grid reversibly coupled to a bottom of the roasting drum, the gas distribution grid configured to receive the loose products on a face of the gas distribution grid; a hatch arranged below the gas distribution grid; an insulated channel configured to allow air to circulate from the heat exchange chamber to the gas distribution grid; and a cooling table configured to receive and cool the loose products, wherein the roasting drum is configured to slide between a closed and an open configuration; the air circulates from the heat exchange chamber through the gas distribution grid and into the roasting drum when the roasting drum is in a closed configuration; and when the roasting drum is slid to the open configuration, the loose products slide through an opening in a bottom of the roasting drum and into the cooling table.

## Claims

1. An apparatus for drying, roasting, and cooling loose products comprising:
**a housing;**
**a roasting drum** (105) configured to receive the loose products;
**a heat source (137)** arranged in an interior of a heat exchange chamber (136) and configured to heat a gas circulated through the housing;
**a gas distribution grid (128),** reversibly coupled to a bottom of the roasting drum (105), in a way that the gas distribution grid (128) configured to receive the loose products (116) on a face of the gas distribution grid;
**a tilting hatch (111),** arranged below the gas distribution grid (128) and configured to rotate between a raised position, when the gas distribution grid (128) is coupled to the bottom of the roasting drum (105) and a lowered position, when the gas distribution grid (128) is uncoupled from the bottom of the roasting drum (105), wherein the tilting hatch (111) in the lowered position allows the loose products (116) to slide down the gas distribution grid (128);
**an insulated channel (139),** configured to allow air to circulate from the heat exchange chamber (136) to the gas distribution grid (128);
**and a cooling table (103),** configured to receive and cool the loose products, wherein when the tilting hatch (111) is rotated to the lowered position, the loose products (116) slide down the gas distribution grid (128) into the cooling table (103).

2. The apparatus of claim 1, further comprising: a ventilator (130), configured to circulate the gas; and a screen (129), configured to filter particulates released from the loose products (116), circulated from the roasting drum (105) to the ventilator (130).

3. The apparatus of claim 1, further comprising: a mixer (120), including a mixer rotor (121) and a plurality of mixing blades (122), attached to the mixer rotor (121), wherein the mixer (120) is arranged in an interior of the roasting drum (105) and attached to the housing, wherein the mixer (120) is configured to rotate about an axis of the mixer rotor and mix loose products (116), arranged in the roasting drum (105); and a hatch lever (203), attached to the housing and configured to raise or lower the tilting hatch (111).

4. The apparatus of claim 1, wherein a hatch lever is attached to the housing that is a hydraulic lever (143) and is configured to raise and lower the tilting hatch (111).

5. The apparatus of claim 1, wherein the tilting hatch (111) includes at least one hatch guide wall (149), configured to guide the loose products (116) into the cooling table (103), when the tilting hatch (111) is in the lowered position.

6. The apparatus of claim 1, wherein the tilting hatch (111) is attached to the housing by a hatch hinge (145), and the hatch hinge is arranged outside an area of the gas distribution grid (128).

7. The apparatus of claim 6, wherein a rotation axis of the gas distribution grid (128) is arranged outside an area of the gas distribution grid when rotating the tilting hatch (111).

8. The apparatus of claim 1, wherein the force to rotate the tilting hatch (111) to the lowered position is based on a weight of the loose products (116), arranged in the roasting drum (105).

9. The apparatus of claim 2, wherein the ventilator (130) is configured to combine ambient gas from an exterior of the housing, heated gas from the heat source, and heated gas circulated through the roasting drum (105), and direct said combination of gasses to the heat exchange chamber (136).

10. The apparatus of claim 1, wherein the gas distribution grid (128) includes a plurality of holes forming a predetermined pattern configured to mix the loose products (116); the plurality of holes providing passages for the heated gas; and the plurality of holes generate a fluid bed for substantially simultaneous mixing and roasting the loose products (116).

11. The apparatus of claim 1, further comprising a computer (133), including a processor that executes a process of roasting the loose products following a predetermined processing regimen.

12. The apparatus of claim 2, wherein the housing includes an upper portion, a lower portion, a first side, and a second side; the roasting drum (105) is arranged in the upper portion of the housing on the first side; the ventilator (130) is arranged in the upper portion of the housing on the second side; the screen (129) is arranged in the upper portion of the housing, substantially, between the roasting drum (105) and the ventilator (130); the tilting hatch (111) is arranged below the roasting drum in the lower portion of the housing on the first side; the heat exchange chamber (136), arranged in the lower portion of the housing on the second side; and the cooling table (103) is arranged below the tilting hatch.

13. The apparatus of claim 2, wherein the ventilator (130) is configured to circulate the gas from the roasting drum (105) to the screen (129), to the heat exchange chamber (136), to the insulated channel, to the gas distribution grid (128), and back to the roasting drum (105).

14. The apparatus of claim 10, wherein the loose products (116) are simultaneously mixed and roasted in substantially circular directions.

15. An apparatus for drying, roasting, and cooling loose products comprising:
a housing;
a slide rail (201), extending horizontally to the exterior of the housing, where the slide rail (201) being configured to horizontally slide an additional rail therefrom;
a roasting drum (200), having an opening in the lower part, and coupled to the slide rail (201) and configured to receive the loose products (116);
a heat source (137), arranged in an interior of a heat exchange chamber (136) and configured to heat a gas circulated through the housing;
a gas distribution grid (128), reversibly coupled to a bottom of the roasting drum (200), wherein the gas distribution grid (128) is configured to receive the loose products (116) on its face;
a hatch (111, 111a) arranged below the gas distribution grid (128);
an insulated channel (139), configured to allow air to circulate from the heat exchange chamber (136) to the gas distribution grid; and
a cooling table (103), configured to receive and cool the loose products (116), wherein the roasting drum (200) is configured to slide between a closed and an open configuration;
wherein the air circulates from the heat exchange chamber (136) through the gas distribution grid (128) and into the roasting drum (200) when the roasting drum is in the closed configuration; and
and in the open configuration the roasting drum is configured with the possibility to slide out together with the roasting product along the sliding rail (201) and an extending additional rail beyond the area of the gas distribution grid (128), to provide discharging of the product onto the cooling table (103) through an opening in a bottom of the roasting drum and complete emptying of the drum (200) when it is positioned on the additional rail.
